# FASCICULE DE BREVET EUROPEEN

(11) **EP 2 897 451 B1**
(45) Date de publication et mention de la délivrance du brevet: **07.11.2018**
(21) Numéro de dépôt: 13773300.2
(22) Date de dépôt: 16.09.2013
(51) Int. Cl.: A01C 7/08, A01B 79/00

(54) **PROCÉDÉ DE RÉALISATION DE BANDE DE MARQUAGE À L'AIDE D'AU MOINS DEUX SEMOIRS ÉVOLUANT EN MÊME TEMPS DANS UN CHAMP**
VERFAHREN ZUM ERSTELLEN VON FAHRGASSEN MIT WENIGSTENS ZWEI SÄMASCHIENEN DIE SICH GLEICHZEITIG AUF DEM FELD BEWEGEN
METHOD FOR REALISING TRAMLINES WITH AT LEAST TWO SOWING MACHINES TRAVELING TOGETHER IN THE FIELD

(30) Priorité: 19.09.2012 FR 1258788
(43) Date de publication de la demande: 29.07.2015
(73) Titulaire: KUHN S.A., 67700 Saverne (FR)
(72) Inventeur: POTIER, Philippe, F-67290 Zittersheim (FR); CITERNE, Sylvain, F-67700 Saverne (FR)
(74) Mandataire: Esch, Esther Evelyne
(86) Numéro de dépôt international: PCT/FR2013/052112
(87) Numéro de publication internationale: WO 2014/044956

(56) Documents cités:
- EP-A1- 0 570 792
- EP-A1- 0 791 285
- EP-A1- 1 839 479
- EP-A2- 2 110 012
- US-A1- 2008 105 177

## Description

La présente invention se rapporte au domaine technique général du machinisme agricole. L'invention concerne un procédé de réalisation de bandes de marquage à l'aide d'au moins deux semoirs évoluant en même temps dans un champ.

Il est connu que pour satisfaire les besoins d'une plante lors de sa croissance et assurer un bon rendement du champ, des opérations culturales de fertilisation et de traitements phytosanitaires sont nécessaires. Ces différentes opérations sont réalisées en fonction du stade de maturité des plantes. Pour que toutes les plantes soient traitées, le champ est jalonné, c'est-à-dire qu'il est pourvu de traces parallèles non semées servant de repères pour les appareils de traitement. Le jalonnage est réalisé au cours du semis par la fermeture des distributions appropriées correspondant à la voie du tracteur utilisé pour le post-traitement après un nombre spécifié d'aller-retour du semoir à travers le champ. En pratique, les semoirs comportent un dispositif permettant de créer de telles traces dans le champ semé. Ces traces seront utilisées lors des épandages d'engrais et/ou lors des traitements phytosanitaires. Le fait de couper la distribution pour matérialiser les traces de l'appareil de traitement évite d'écraser les plantes lors du passage de l'appareil de traitement et évite surtout de gaspiller la semence. La périodicité du jalonnage dans un champ est fonction de la largeur du semoir et de celle des appareils de traitement de manière à éviter les recouvrements et/ou les manques entre deux passages.

Pour faire ces opérations de traitement et surtout pour la moisson, il faut que les plantes d'un champ soient au même stade de développement, il est donc important que le semis se déroule sensiblement dans les mêmes conditions ; ce qui veut dire que le champ doit être ensemencé le plus rapidement possible. Ainsi, pour les champs de grandes surfaces, il est courant que plusieurs semoirs se suivent et travaillent simultanément. Etant donné que le semis se déroule avec plusieurs semoirs qui se suivent, le jalonnage ne peut pas se faire de manière automatique. Il est courant que ce soit le boîtier de commande du semoir de tête qui fournisse les indications de jalonnage. Ainsi, le chauffeur du semoir de tête doit indiquer, avec des gestes lorsqu'il arrive à l'extrémité du champ, à l'un des autres chauffeurs que le jalonnage doit maintenant être réalisé par son semoir. Il doit aussi lui indiquer quelles sont les distributions qui doivent être isolées pour que les sillons correspondants soient exempts de semence. Comme les semoirs sont amenés à se suivre et que le jalonnage se répète de façon périodique, le chantier est arrêté régulièrement avec un temps d'attente plus ou moins long.

Le document US 2008/0105177 A1 divulgue un procédé de réalisation de bandes de marquage/jalonnage au moyen d'un unique semoir présentant un boîtier de commande et plusieurs rangs pouvant être activés pour le semis, respectivement désactivés pour obtenir des traces sans graines qui seront utilisées comme voies de circulation pour un appareil de traitement dans les opérations de post-traitement.

Le document EP 1 839 479 A1 divulgue un procédé de contrôle de machines agricoles dans lequel une machine dépend des informations transmises dynamiquement par une autre machine. Le but de la présente invention consiste à remédier aux inconvénients de l'état de la technique en proposant un jalonnage automatique dans le cas d'un chantier multi-semoirs.

A cet effet, il est proposé un procédé de réalisation de bandes de marquage à l'aide d'au moins deux semoirs évoluant en même temps dans un champ dans lequel un semoir est le semoir de tête et au moins un autre semoir suit le semoir de tête en étant décalé latéralement, chaque semoir présente un boîtier de commande et plusieurs rangs pouvant être activés pour le semis, respectivement désactivés pour obtenir des traces sans graines qui seront utilisées comme voie de circulation pour un appareil de traitement dans les opérations de post-traitement, chaque boîtier de commande comporte un logiciel déterminant en fonction des paramètres de travail fixés, un programme de fonctionnement automatique permettant d'activer ou de désactiver l'un au moins des rangs de l'un des semoirs.

Grâce à l'invention, chaque semoir est autonome quant à la détermination du rythme de jalonnage, par conséquent, tous les chauffeurs peuvent rester concentrés sur la manoeuvre de demi-tours en bout de champ. Avec le procédé de réalisation de bandes de marquage de la présente invention, le jalonnage n'est plus dépendant du chauffeur du semoir de tête puisque chaque semoir est configuré automatiquement pour que les traces soient matérialisées au bon endroit et par le semoir approprié. La concentration et l'exactitude des signes du chauffeur du semoir de tête ne sont plus primordiales pour obtenir des traces sans graines. Le risque d'erreur, due à une incompréhension, comme les temps d'attente nécessaires à la transmission des indications de jalonnage sont éliminés.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** est une vue de côté d'un des semoirs équipé selon la présente invention et attelé à un tracteur,
- la **figure 2** représente, sous forme simplifiée et schématique, une vue de dessus d'un champ sur lequel circulent plusieurs semoirs selon la présente invention.

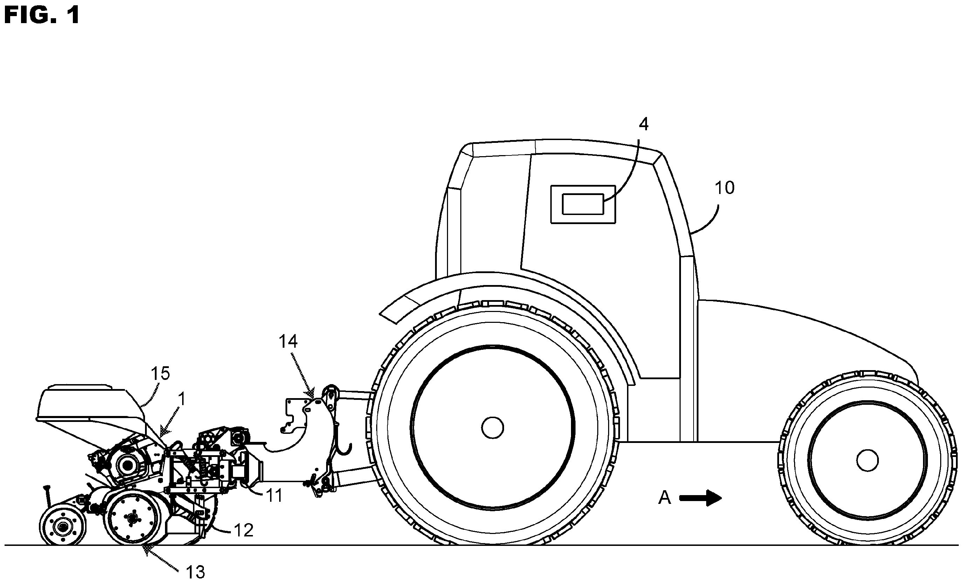

La figure 1 montre un semoir (1) attelé à un tracteur (10) dans une configuration de travail qui est capable de répartir les graines sur plusieurs rangs (5). Le semoir (1) comporte un châssis (11) qui s'appuie sur le sol au moyen de roues porteuses (12) et des éléments semeurs (13) répartis de manière régulière et réglable sur ledit châssis (11). Le châssis (11) présente un cadre d'attelage (14) permettant d'établir une liaison à un attelage trois points du tracteur (10). Le tracteur (10) déplace le semoir (1) suivant une direction d'avance indiquée par la flèche (A). Dans la suite de la description, les notions suivantes "avant", "arrière" et "devant", "derrière" sont définies par rapport au sens d'avance (A). Pour la gestion et la surveillance du semis, le semoir (1) présente un boîtier de commande (4). Ce boîtier de commande (4) permet également de piloter le jalonnage, c'est-à-dire d'obtenir des voies non ensemencées à des intervalles déterminés. Ces voies seront utilisées lors des épandages d'engrais et/ou lors des traitements phytosanitaires effectués par des appareils de traitement (7). En règle générale, les appareils de traitement (7) possèdent une largeur de traitement supérieure à la largeur de travail du semoir (1). Les appareils de traitement sont, par exemple, un épandeur d'engrais, un pulvérisateur, ... Ces intervalles pour créer des couloirs de passage sont déterminés en fonction de la largeur de travail du semoir (1) et de la largeur de traitement des appareils de traitement (7).

Le semoir (1) de la figure 1 est un semoir monograine qui distribue les graines une à une sur la ligne de semis à des écartements constants. Un tel semoir (1) travaille sur plusieurs rangs (5) et présente un élément semeur (13) par rang de semis. Le châssis (11) est constitué d'une poutre transversale sensiblement horizontale et dirigée perpendiculairement à la direction d'avance (A) lors du travail, sur laquelle sont répartis les éléments semeurs (13) suivant un écartement défini et réglable. La poutre transversale peut présenter une longueur variable. Les éléments semeurs (13) sont avantageusement répartis symétriquement sur la poutre transversale par rapport au plan vertical médian du semoir (1). Chaque élément semeur (13) possède sa trémie (15), sa distribution, ses organes d'enterrage, de rappuyage, de recouvrement et de contrôle de profondeur. Chaque élément semeur (13) est monté respectivement sur le châssis (11) au moyen d'un parallélogramme déformable, lequel permet à l'élément semeur (13) de rester parallèle au sol en toutes positions. La distribution a pour rôle d'extraire une à une les graines de la trémie et de les répartir à intervalle constant sur le rang de semis. La trémie (15) constitue la réserve de graines et alimente normalement un rang.

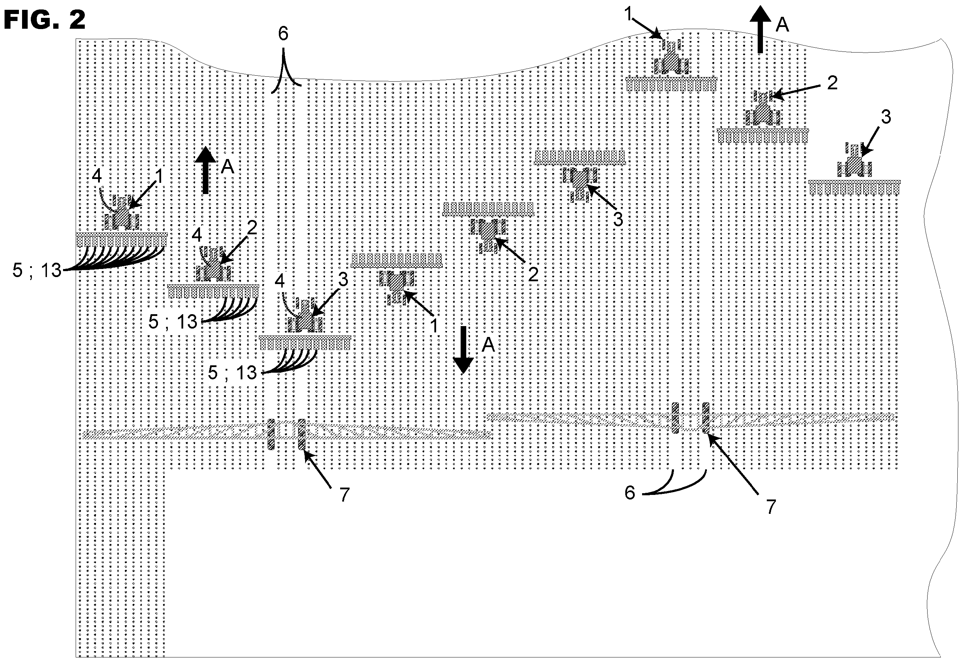

La figure 2 représente schématiquement un champ à ensemencer, en vue de dessus, sur lequel sont amenés à se déplacer plusieurs semoirs simultanément. Pour la suite de la description, les notions "droite" et "gauche" sont définies en regardant le semoir de l'arrière dans la direction d'avance (A). On remarque que le semis débute le long de la bordure gauche de la parcelle avec le semoir de tête (1). Dans l'exemple de réalisation représenté à la figure 2, le semis est réalisé au moyen de trois semoirs (1, 2, 3) qui circulent selon le même sens d'avance. Le semoir de tête (1) débute le semis à partir du bord du champ et les autres semoirs (2, 3) suivent le semoir de tête (1) de manière décalée latéralement. Le décalage latéral correspond à la largeur de travail du semoir précédent.

La présente invention propose un procédé de réalisation de bandes de marquage à l'aide d'au moins deux semoirs (1, 2, 3) évoluant en même temps dans un champ dans lequel un semoir est le semoir de tête (1) et au moins un autre semoir (2, 3) suit le semoir de tête (1) en étant décalé latéralement, chaque semoir (1, 2, 3) présente un boîtier de commande (4) et plusieurs rangs (5) pouvant être activés pour le semis respectivement désactivés pour obtenir des traces (6) sans graines qui seront utilisées comme voie de circulation pour un appareil de traitement (7) dans les opérations de post-traitement, chaque boîtier de commande (4) comportant un logiciel déterminant en fonction des paramètres de travail fixés, un programme de fonctionnement automatique permettant d'activer ou de désactiver l'un au moins des rangs (5) de l'un des semoirs (1 ; 2 ; 3). Avec ce procédé de jalonnage, en présence de plusieurs semoirs (1 ; 2 ; 3), les voies de circulation sans graines pour l'appareil de traitement (7) sont déterminées de manière automatique grâce au logiciel contenu dans les boîtiers de commande (4). Le programme de fonctionnement automatique permet donc de donner les informations de jalonnage au(x) semoir(s) approprié(s). La matérialisation de ces voies dans le champ n'est donc plus dépendante des chauffeurs. Le chauffeur de tête n'a plus besoin de se concentrer sur les gestes qui permettent aux autres chauffeurs de réaliser les voies au bon endroit. Grâce à ce procédé automatique de détermination, le risque d'erreur, quant au placement des voies de circulation, est éliminé. Le travail des chauffeurs est donc simplifié et ils peuvent rester concentrés d'une part sur les manoeuvres de demi-tours en bout de champ et d'autre part sur la conduite du tracteur de façon à réaliser un semis rectiligne. De plus, avec ces voies de circulation où aucune semence ne pousse, les roues du tracteur n'écrasent pas les plants issus de la semence.

La figure 2 est une représentation simplifiée de l'ensemencement d'une partie d'un champ avec trois semoirs (1, 2, 3). Chaque point matérialise une graine déposée dans le sol et les limites du champ sont matérialisées par un trait fin. Pour une meilleure compréhension, les semoirs (1, 2, 3) sont représentés sur le champ déjà ensemencé. Sur cette figure, chaque semoir (1, 2, 3) est représenté trois fois pour montrer les passages successifs de chacun. Un des semoirs (1, 2, 3) est le semoir de tête (1) et deux autres semoirs (2, 3) suivent le semoir de tête (1) en étant décalé latéralement vers la partie du champ qui reste encore à ensemencer.

En pratique, la bande située au bord du champ est ensemencée par le semoir de tête (1) qui débute le chantier. La bande directement à côté, dans la partie du champ non encore semée, est effectuée par le deuxième semoir (2) qui suit le semoir de tête (1). Puis la bande suivante est ensemencée par le troisième semoir (3) dont certains rangs de semis sont désactivés pour le jalonnage, dans l'exemple représenté. Le troisième semoir (3) suit le deuxième semoir (2). La bande qui suit sera semée par le semoir de tête (1) après avoir effectué un demi-tour, puis suivront le deuxième semoir (2) et le troisième semoir (3), etc. On constate que deux bandes de champ directement voisines sont toujours ensemencées par deux semoirs différents. Le décalage dans le sens d'avance (A) du semoir de tête (1) et du deuxième semoir (2) et du troisième semoir (3) est de l'ordre de quelques dizaines de mètres. Les semoirs (1, 2, 3) travaillent l'un derrière l'autre, tout en étant décalés latéralement. La largeur des bandes correspond à la largeur de travail de chaque semoir (1, 2, 3). Le décalage latéral correspond à une largeur de travail du semoir. Ainsi le décalage latéral du deuxième semoir (2) par rapport au semoir de tête (1) correspond à la largeur de travail du semoir de tête (1). Le décalage latéral du troisième semoir (3) par rapport au semoir de tête (1) correspond à la largeur de travail du semoir de tête (1) additionné à la largeur de travail du deuxième semoir (2).

Chaque semoir (1, 2, 3) possède la même largeur de travail, c'est-à-dire le même nombre de rangs avec le même écartement entre rangs. La largeur de traitement de l'appareil de traitement (7) représente au moins le quadruple de la largeur de travail d'un semoir. L'appareil de traitement (7) est représenté par une rampe d'épandage. On distingue des passages normaux et des passages avec voie jalonnée, c'est-à-dire avec au moins un rang non semé. Les passages normaux correspondent à des passages pour lesquels tous les rangs (5) du semoir sont activés. Dans l'exemple représenté, les passages avec voie jalonnée sont le premier passage du troisième semoir (3) et le troisième passage du semoir de tête (1). Pour ces deux passages avec voie jalonnée, on remarque que deux rangs (5) ont été désactivés pour créer des lignes de semis ou voies sans graines. Entre le premier passage et le deuxième passage, chaque semoir (1, 2, 3) a effectué un demi-tour en bout de champ. L'exemple représenté correspond à un rythme de jalonnage pour des semoirs avec douze rangs à écartement 45 cm entre rangs et un pulvérisateur de 24 m avec une voie de 1m80 et un rang par trace. Les semoirs (1, 2, 3), représentés, sont des semoirs du type monograine.

On remarque que le semis du champ commence côté gauche du champ et que seul le premier passage du semoir de tête (1) débute au bord inférieur du champ, pour tous les autres passages le semis débute, respectivement s'arrête, à une certaine distance de ce bord. Cette zone est dépourvue de graines pour permettre au tracteur d'effectuer les manoeuvres de demi-tour sans déplacer les graines. Cette zone sera semée en dernier lorsque toute la partie centrale est ensemencée.

De préférence, une ligne ou voie sans graines est obtenue par désactivation d'un ou plusieurs rangs (5) du semoir. Pour cela, le semoir (1, 2, 3) présente au moins un dispositif d'activation ou de désactivation. D'une manière avantageuse, plusieurs rangs (5) sont équipés d'un tel dispositif d'activation ou de désactivation. Certains semoirs présentent même un tel dispositif d'activation ou de désactivation pour chaque rang (5). Dans l'exemple du semoir monograine, il s'agit d'entraîner ou non la distribution d'un ou plusieurs éléments semeurs en fonction de la position des voies de jalonnage dans le champ et de la bande qui va être ensemencée par l'un des semoirs (1, 2, 3).

Comme les voies de circulation de l'appareil de traitement (7) sont matérialisées lors du semis, il est nécessaire d'indiquer certains paramètres de travail au boîtier de commande (4) des semoirs (1, 2, 3). Ces paramètres sont le nombre de rangs, l'écartement entre rangs, la largeur de traitement et la largeur de la voie de l'appareil de traitement (7), le nombre de rangs à couper par trace (6), le nombre de semoirs et le numéro du semoir. Il faudra aussi renseigner le côté de la bordure pour le premier passage. Pour simplifier le nombre d'entrées à effectuer dans le boîtier de commande (4), il est également possible de renseigner directement le rythme de jalonnage souhaité. Le rythme est calculé grâce au nombre de rangs multiplié par l'écartement entre rangs qui donne la largeur de travail du semoir. Le rapport de la largeur de traitement sur la largeur de travail donne le rythme. Le rythme est également un paramètre de travail.

Avec ces informations, le logiciel de chaque boîtier peut déterminer le programme de fonctionnement automatique pour désactiver l'un au moins des rangs (5) de l'un des semoirs (1 ; 2 ; 3). Par ailleurs, le programme de fonctionnement automatique détermine pour chaque rang (5) s'il doit être activé ou désactivé pour obtenir des traces (6) les plus proches possible de la position théorique des traces de l'appareil de traitement (7). Le programme de fonctionnement automatique calcule la position des rangs (5) en fonction du côté de la bordure du premier passage. Comme le procédé de réalisation des bandes de marquage est mis en oeuvre par plusieurs semoirs, les paramètres de travail sont insérés dans le boîtier de commande (4) de chaque semoir (1, 2, 3). Les paramètres de travail peuvent être renseignés dans chaque boîtier de commande (4) de façon individuelle. Pour éviter les erreurs et réduire les temps d'attente avant le départ du chantier, la majeure partie des paramètres de travail peut être renseignée dans l'un des boîtiers de commande puis peut être transférée aux autres boîtiers de commande au moyen d'une liaison sans fil ou via un support de stockage amovible. Par contre, il faudra renseigner systématiquement pour chaque boîtier de commande (4) le numéro ou la position du semoir qui lui est attribué par rapport aux autres semoirs (1, 2, 3). Dans une alternative, ces paramètres de travail sont transférés depuis une machine électronique telle qu'un ordinateur de gestion de la ferme.

Dans ce procédé de réalisation des bandes de marquage, il est important que l'ordre de placement des semoirs (1, 2, 3) dans le champ soit respecté. Ainsi, il y a un semoir de tête (1) qui initie le chantier en respectant le côté de la bordure pour le premier passage et les autres semoirs (2, 3) suivent le semoir de tête (1) dans le même sens et selon le numéro d'attribution respectif. Le semoir de tête (1) est le premier semoir, celui qui commence le travail dans le champ. Pour que les traces (6) sans graines soient bien positionnées, chaque boîtier de commande (4) doit suivre les changements de direction de déplacement du semoir (1, 2, 3) respectif. Le changement de direction a lieu lors du demi-tour du tracteur en bout de champ. Chaque semoir est équipé d'un moyen de détection de demi-tour. Selon un exemple de réalisation, le moyen de détection est un capteur de butée placé sur un élément semeur pour détecter lorsque cet élément semeur est en butée haute. Dans une alternative, le moyen de détection est placé sur le traceur de prélevée. Le moyen de détection peut également être un capteur de vitesse. Selon une autre possibilité la détermination du changement de direction du semoir (1, 2, 3) est de suivre la position du relevage hydraulique du tracteur. En effet, lorsque le semoir arrive en bout de champ, le chauffeur relève le semoir pour effectuer le demi-tour.

Selon l'exemple de réalisation représenté, les semoirs (1, 2, 3) comportent un même nombre de rangs et un même écartement entre rangs. Dans une alternative non représentée, les semoirs (1, 2, 3) comportent un nombre de rangs et/ou un écartement entre rangs différents. Les semoirs (1, 2, 3) sont du type semoir en lignes ou du type semoir monograine.

L'invention trouve également son application pour un semoir en lignes. Le dispositif pour activer et pour désactiver est réalisé sous la forme d'un système de fermeture permettant ou non l'alimentation en graines du ou des rangs (5).

Dans une autre réalisation de l'invention, le programme de fonctionnement automatique est capable de gérer des traces (6) pour deux appareils de traitement (7) dont la largeur de travail et/ou la largeur des voies sont différentes. Ces informations relatives aux paramètres de travail des deux appareils de traitement (7) sont renseignées dans les boîtiers de commande (4).

Il est bien évident que l'invention n'est pas limitée aux modes de réalisation décrits ci-dessus et représentés sur les dessins annexés. Des modifications restent possibles dans la limite définie par les revendications suivantes.

## Revendications

1. Procédé de réalisation de bandes de marquage à l'aide d'au moins deux semoirs (1, 2, 3) évoluant en même temps dans un champ dans lequel un semoir est le semoir de tête (1) et au moins un autre semoir (2, 3) suit le semoir de tête (1) en étant décalé latéralement, chaque semoir (1, 2, 3) présente un boîtier de commande (4) et plusieurs rangs (5) pouvant être activés pour le semis respectivement désactivés pour obtenir des traces (6) sans graines qui seront utilisées comme voie de circulation pour un appareil de traitement (7) dans les opérations de post-traitement, chaque boîtier de commande (4) comporte un logiciel déterminant, en fonction des paramètres de travail fixés et renseignés dans chaque boîtier de commande (4) de façon individuelle, un programme de fonctionnement automatique permettant d'activer ou de désactiver l'un au moins des rangs (5) de l'un des semoirs (1 ; 2 ; 3), chaque semoir (1 ; 2 ; 3) étant équipé d'un moyen de détection de demi-tour, chaque semoir (1 ; 2 ; 3) étant autonome quant à la détermination d'un rythme de jalonnage.

2. Procédé selon la revendication 1, ***dans lequel*** les paramètres de travail sont le nombre de rangs, l'écartement entre rangs, la largeur de traitement et la largeur de la voie de l'appareil de traitement (7), le nombre de rangs à couper par trace (6), le nombre de semoirs et le numéro du semoir.

3. Procédé selon la revendication 1 ou 2, ***dans lequel*** l'un des semoirs est de tête et le semoir de tête (1) initie le chantier en respectant le côté de la bordure pour le premier passage et les autres semoirs (2, 3) suivent le semoir de tête (1) dans le même sens et selon le numéro d'attribution respectif.

4. Procédé selon l'une quelconque des revendications 1 à 3, ***dans lequel*** le programme de fonctionnement automatique détermine pour chaque rang (5) s'il doit être activé ou désactivé pour obtenir des traces (6) les plus proches possible de la position théorique des traces de l'appareil de traitement (7).

5. Procédé selon l'une quelconque des revendications 1 à 4, ***dans lequel*** les semoirs (1, 2, 3) comportent un même nombre de rangs et un même écartement entre rangs.

6. Procédé selon l'une quelconque des revendications 1 à 4, ***dans lequel*** les semoirs (1, 2, 3) comportent un nombre de rangs et/ou un écartement entre rangs différents.

7. Procédé selon l'une quelconque des revendications 1 à 6, ***dans lequel*** le numéro du semoir est renseigné systématiquement dans chaque boîtier de commande (4).

8. Procédé selon l'une quelconque des revendications 1 à 7, ***dans lequel*** le programme de fonctionnement automatique calcule la position des rangs en fonction du côté de la bordure du premier passage.

9. Procédé selon l'une quelconque des revendications 1 à 8, ***dans lequel*** chaque boîtier de commande (4) suit le changement de direction du semoir (1, 2, 3) respectif après un demi-tour au bord du champ.

10. Procédé selon l'une quelconque des revendications 1 à 9, ***dans lequel*** chaque boîtier de commande (4) comporte le même logiciel.

11. Procédé selon l'une quelconque des revendications 1 à 10, ***dans lequel*** les semoirs (1, 2, 3) sont du type semoir en lignes ou du type semoir monograine.

12. Procédé selon l'une quelconque des revendications 1 à 11, ***dans lequel*** le programme de fonctionnement automatique est capable de gérer des traces (6) pour deux appareils de traitement (7) dont la largeur de travail et/ou la largeur des voies sont différentes.

## Patentansprüche

1. Herstellungsverfahren für Fahrbahnmarkierungsbänder mittels mindestens zwei Sämaschinen (1, 2, 3), die sich gleichzeitig auf einem Feld bewegen, ***bei welchem*** eine Sämaschine die Führungssämaschine (1) bildet und mindestens eine weitere Sämaschine (2, 3) der Führungssämaschine (1) mit seitlicher Verschiebung folgt, jede Sämaschine (1, 2, 3) weist eine Steuereinheit (4) und mehrere Reihen (5) auf, die zum säen eingesetzt beziehungsweise zum Erhalt von saatfreien Spuren (6), die als Fahrspuren für eine Behandlungsvorrichtung (7) für Nachbehandlungsarbeiten benutzt werden, ausgesetzt werden können, jede Steuereinheit (4) verfügt über Software, welches bezüglich vorgesetzten Arbeitsparametern, die in jeder Steuereinheit (4) einzeln gespeichert sind, ein automatisches Betriebsprogramm bestimmt, das gestattet mindestens eine der Reihen (5) einer Sämaschine (1 ; 2 ; 3) ein- oder auszusetzen, wobei jede Sämaschine (1 ; 2 ; 3) mit einem Kehrtwendungdetektionsmittel versehen ist, wobei jede Sämaschine (1; 2; 3) zur Bestimmung eines Feldmarkierungstempo autonom ist.

2. Verfahren nach Anspruch 1, ***bei welchem*** die Arbeitsparameter durch Reihenanzahl, Reihenabstand, Behandlungsbreite und Spurbreite der Behandlungsvorrichtung (7), Anzahl der für jede Spur (6) abzuschaltende Reihen, Sämaschinenanzahl und Nummer gebildet sind.

3. Verfahren nach Anspruch 1 oder 2, ***bei welchem*** eine der Sämaschinen die Führungssämaschine (1) ist und die Führungssämaschine (1) die Baustelle beginnt, bei Einhaltung der Seite des Feldrandes für die erste Durchfahrt und die weitere Sämaschinen (2, 3) folgen der Führungssämaschine (1) in die gleiche Richtung und gemäss der entsprechenden Zuteilungsnummer.

4. Verfahren nach irgend einem der Ansprüche 1 bis 3, ***bei welchem*** das automatische Betriebsprogramm für jede Reihe (5) bestimmt, ob sie ein- oder ausgesetzt werden muss, um Spuren (6) zu erhalten, die der Sollposition der Spuren der Behandlungsvorrichtung (7) am nahest liegen.

5. Verfahren nach irgend einem der Ansprüche 1 bis 4, ***bei welchem*** die Sämaschinen (1, 2, 3) eine gleiche Anzahl von Reihen und einen gleichen Reihenabstand aufweisen.

6. Verfahren nach irgend einem der Ansprüche 1 bis 4, ***bei welchem*** die Sämaschinen (1, 2, 3) eine verschiedene Anzahl von Reihen und/oder einen verschiedenen Reihenabstand aufweisen.

7. Verfahren nach irgend einem der Ansprüche 1 bis 6, ***bei welchem*** die Nummer der Sämaschine systematisch in jeder Steuereinheit (4) gespeichert ist.

8. Verfahren nach irgend einem der Ansprüche 1 bis 7, ***bei welchem*** das automatische Betriebsprogramm die Position der Reihen bezüglich der Seite des Feldrandes für die erste Durchfahrt berechnet.

9. Verfahren nach irgend einem der Ansprüche 1 bis 8, ***bei welchem*** jede Steuereinheit (4) dem Richtungswechsel der entsprechenden Sämaschine (1, 2, 3) nach einer Kehrtwendung am Feldrande folgt.

10. Verfahren nach irgend einem der Ansprüche 1 bis 9, ***bei welchem*** jede Steuereinheit (4) das gleiche Software enthält.

11. Verfahren nach irgend einem der Ansprüche 1 bis 10, ***bei welchem*** die Sämaschinen (1, 2, 3) der Drillmaschinen- oder Einzelkornsämaschinenart sind.

12. Verfahren nach irgend einem der Ansprüche 1 bis 11, ***bei welchem*** das automatische Betriebsprogramm fähig ist, Spuren (6) für zwei Behandlungsvorrichtungen (7) mit verschiedenen Arbeitsbreiten und/oder verschiedenen Spurbreiten zu verwalten.

## Claims

1. Method for producing marking strips using at least two seeders (1, 2, 3) moving simultaneously in a field ***in which*** one seeder is the head seeder (1) and at least one other seeder (2, 3) follows the head seeder (1), being laterally offset, each seeder (1, 2, 3) has a control unit (4) and several rows (5) that can be respectively activated for the seeding or deactivated to produce tracks (6) without seeds which will be used as a circulation lane for a treating apparatus (7) in post-treatment operations, each control unit (4) comprises a software programme defining, on the basis of fixed working parameters which are input individually into each control unit (4), an automatic operating programme for activating or deactivating at least one of the rows (5) of one of the seeders (1; 2; 3), each seeder (1; 2; 3) being equipped with a half turn detection means, each seeder (1; 2; 3) being independent for determining a tramlining pace.

2. Method according to claim 1, ***in which*** the working parameters are the number of rows, the spacing between rows, the treatment width and width of the track for the treatment apparatus (7), the number of rows to be cut off per track (6), the number of seeders and the number of the seeder.

3. Method according to claim 1 or 2, ***in which*** one of the seeders is a head seeder (1) that initiates the work on the site while respecting the appropriate side of the edge for the first pass and the other seeders (2, 3) follow the head seeder (1) in the same direction and in accordance with the respective assignment number.

4. Method according to any one of claims 1 to 3, ***in which*** the automatic operating programme determines for each seeding row (5) whether it is to be activated or deactivated in order to produce the tracks (6) as close as possible to the theoretical position of the tracks of the treating apparatus (7).

5. Method according to any one of claims 1 to 4, ***in which*** the seeders (1, 2, 3) comprise a same number of rows and a same spacing distance between rows.

6. Method according to any one of claims 1 to 4, ***in which*** the seeders (1, 2, 3) comprise a different number of rows and/or a different spacing distance between rows.

7. Method according to any one of claims 1 to 6, ***in which*** the number of the seeder is input systematically into each control unit (4).

8. Method according to any one of claims 1 to 7, ***in which*** the automatic operating programme calculates the position of the rows with regard to the side of the edge of the first pass.

9. Method according to any one of claims 1 to 8, ***in which*** each control unit (4) monitors the change in direction of the respective seeder (1, 2, 3) after a half turn at the edge of the field.

10. Method according to any one of claims 1 to 9, ***in which*** each control unit (4) has the same software programme.

11. Method according to any one of claims 1 to 10, ***in which*** the seeders (1, 2, 3) are of the seed drill type or single seeder type.

12. Method according to any one of claims 1 to 11, ***in which*** the automatic operating programme is capable of managing the tracks (6) for two treating apparatuses (7), whereof the working width and/or the width of the tracks are different.
